# EUROPÄISCHE PATENTSCHRIFT

(11) **EP 2 417 023 B1**
(45) Veröffentlichungstag und Bekanntmachung des Hinweises auf die Patenterteilung: **17.10.2018**
(21) Anmeldenummer: 10712424.0
(22) Anmeldetag: 31.03.2010
(51) Int. Cl.: B64C 9/02

(54) **FLÜGEL EINES FLUGZEUGS ODER EINES RAUMFAHRZEUGS MIT EINEM BEWEGLICHEN STRÖMUNGSKÖRPER**
WING OF AN AIRCRAFT OR SPACECRAFT, COMPRISING A MOBILE FLOW BODY
AILE D'UN AVION OU D'UN VAISSEAU SPATIAL COMPORTANT UN CORPS D'ÉCOULEMENT MOBILE

(30) Priorität: 06.04.2009 DE 102009002222; 06.04.2009 US 166859 P
(43) Veröffentlichungstag der Anmeldung: 15.02.2012
(73) Patentinhaber: Airbus Operations GmbH, 21129 Hamburg (DE)
(72) Erfinder: HEINTJES, Mark, 28844 Weyhe (DE)
(74) Vertreter: Isarpatent
(86) Internationale Anmeldenummer: PCT/EP2010/054338
(87) Internationale Veröffentlichungsnummer: WO 2010/115815

(56) Entgegenhaltungen:
- WO-A1-2008/129074
- US-A- 4 470 569
- US-A1- 2007 034 748

## Beschreibung

Die vorliegende Erfindung betrifft einen Flügel eines Flugzeugs oder eines Raumfahrzeugs mit einem beweglichen Strömungskörper, wie beispielsweise einer Klappe oder einer Landeklappe.

Die Flügel eines Flugzeugs weisen normalerweise mehrere Landeklappen auf. Diese Landeklappen werden beispielsweise beim Landen ausgefahren bzw. nach außen geschwenkt, um einen geeigneten Widerstand zu erzeugen, um das Flugzeug abzubremsen. Normalerweise dreht sich dabei eine Landeklappe um eine Drehachse, wobei die Landeklappe sich dabei nur senkrecht zur der Drehachse bewegen kann. Des Weiteren dienen die Landeklappen auch insbesondere dazu beim Starten bzw. Take-off einen stärkeren Auftrieb zu erzeugen.

WO 2008/129074 A1 offenbart einen Flügel für ein Luftfahrzeug, wobei eine Landeklappe durch mehrere bewegliche Stützeinrichtungen mit dem Flügel verbunden ist. Darüber hinaus ist die Landeklappe durch eine Steuerstange mit dem Flügel verbunden. Beim Ausfahren der Landeklappe bewirkt diese Steuerstange eine laterale Bewegung der Landeklappe nach außen.

Aus der US 2007/0034748 A1 ist des Weiteren ein Flugzeugflügel mit Landeklappen bekannt. Dabei ist eine Stütze vorgesehen. Die Stütze ist dabei an einem ersten Abschnitt mit dem Flugzeugflügel fest bzw. unbeweglich verbunden. Ein zweiter Abschnitt der Stütze ist über ein erstes Verbindungselement mit einem Strukturbauteil der Landeklappe verbunden. Des Weiteren ist der zweite Abschnitt der Stütze über ein zweites Verbindungselement mit einer Antriebsvorrichtung verbunden. Die Verbindung der Stütze mit dem ersten und zweiten Verbindungselement bildet hierbei eine feste Drehachse HA (Hingeline HA) aus. Die Verbindung bzw. der Verbindungspunkt des ersten Verbindungselements mit dem Strukturbauteil der Landeklappe bildet des Weiteren eine erste Ausgleichseinrichtung.

Weiter bildet die Verbindung bzw. der Verbindungspunkt des zweiten Verbindungselements mit dem Strukturbauteil der Landeklappe die zweite Ausgleichseinrichtung. Die Verbindung bzw. der Verbindungspunkt des zweiten Abschnitts der Stütze mit dem ersten und zweiten Verbindungselement bildet die dritte Ausgleichseinrichtung. Die Ausgleichseinrichtungen dienen dazu, dass die Landeklappe gleichzeitig um die feste Drehachse HA und eine andere nicht parallele Achse drehen kann.

Die US 2007/0034748 A1 hat den Nachteil, dass die Betätigung der jeweiligen Landeklappe aufwendig und teuer ist, da hierzu ein komplizierter Aufbau notwendig ist, bestehend aus der am Flügel fest angebrachten Stütze, dem ersten und zweiten Verbindungselement und den Ausgleichseinrichtungen.

Der vorliegenden Erfindung liegt daher die Aufgabe zugrunde, einen verbesserten Flügel mit einem beweglichen Strömungskörper, wie z.B. einer Landeklappe, bereitzustellen. Erfindungsgemäß wird diese Aufgabe durch einen Flügel mit einem beweglichen Strömungskörper mit den Merkmalen des Anspruchs 1 gelöst.

Der Flügel hat hierbei den Vorteil, dass er einen einfachen Aufbau aufweist, zum Führen bzw. Leiten des Strömungskörpers in einer vorbestimmten Ebene um eine Achse, so dass der Strömungskörper beispielsweise in Strömungsrichtung ausgefahren werden kann. Hierzu weist der Flügel gemäß der Erfindung eine Strömungskörpersteuereinrichtung auf, die geneigt zu der Stützeeinrichtung des Flügels angeordnet ist. Dabei stützt die Strömungskörpersteuereinrichtung den Strömungskörper und die Stützeinrichtung seitlich ab und nimmt dabei seitliche Kräfte des Flügels auf. Ein weiterer Vorteil ist, wie zuvor beschrieben, dass ein Teil bzw. ein Punkt des Strömungskörpers durch die Strömungskörpersteuereinrichtung in einer vorbestimmten Ebene geführt werden kann, wodurch der Strömungskörper insgesamt auf einer virtuellen Achse so gedreht werden kann, dass er beispielsweise in Strömungsrichtung des Flugzeugs geschwenkt bzw. ausgefahren werden kann. Dadurch kann außerdem beispielsweise kein Spalt oder nur ein kleiner Spalte zu einem benachbarten Flugzeugflügel oder einem anderen benachbarten Strömungskörper vorgesehen werden, und somit der aerodynamische Widerstand reduziert werden.

Vorteilhafte Ausgestaltungen und Weiterbildungen der Erfindung ergeben sich aus den Unteransprüchen sowie der Beschreibung unter Bezugnahme auf die Zeichnungen.

In einer Ausführungsform der Erfindung ist die zweite Stützeinrichtung in einem Lagerpunkt an dem Flügel und in wenigstens einem oder zwei Lagerpunkten an dem Strömungskörper befestigt. Durch die Befestigung der Stützeinrichtung an dem Strömungskörper in zwei Lagerpunkten kann die Stabilität der Verbindung dieser beiden Teile weiter erhöht werden.

Gemäß einer weiteren erfindungsgemäßen Ausführungsform ist die Strömungskörpersteuereinrichtung in einem Lagerpunkt an dem Flügel und in wenigstens einem Lagerpunkt an dem Strömungskörper befestigt. Dadurch kann eine besonders kostengünstige Befestigung der Strömungskörpereinrichtung erzielt werden, da nur jeweils ein Lagerpunkt an dem Strömungskörper bzw. dem Flügel vorgesehen werden muss.

In einer Ausführungsform der Erfindung ist die Strömungskörpersteuereinrichtung zu der zweiten Stützeinrichtung derart positioniert, dass sie Kräfte der zweiten Stützeinrichtung in einer vorbestimmten Richtung aufnimmt. Beispielsweise kann die Strömungskörpersteuereinrichtung derart zu der Stützeinrichtung positioniert bzw. geneigt sein, so dass die Strömungskörpereinrichtung laterale bzw. axiale Kräfte der zweiten Stützeinrichtung aufnimmt. Dies hat den Vorteil, dass eine axiale Bewegung des Strömungskörpers verhindert werden kann und dadurch ein Spalt zwischen dem Strömungskörper und einem benachbarten Strömungskörper zumindest reduziert oder ganz weggelassen werden kann.

In einer anderen erfindungsgemäßen Ausführungsform ist die zweite Stützeinrichtung als ein Rahmenelement oder eine Platte ausgebildet oder weist ein oder mehrere Stangenelemente auf. Die zweite Stützeinrichtung bildet dabei beispielsweise eine Bügelform oder eine Dreiecksform. Die flächige Form eines Bügels oder Dreiecks hat den Vorteil, dass die Stützeinrichtung eine größere Stabilität aufweist. Gemäß einer weiteren erfindungsgemäßen Ausführungsform bilden der Lagerpunkt der Strömungskörpersteuereinrichtung an dem Strömungskörper und der Lagerpunkt der zweiten Stützeinrichtung an dem Strömungskörper einen gemeinsamen Lagerpunkt. Dies hat den Vorteil, dass nur ein Lagerpunkt notwendig ist zur Verbindung der Strömungskörpersteuereinrichtung und der Stützeinrichtung mit dem Strömungskörper. Alternativ können beide Lagerpunkte auch jeweils als getrennte bzw. eigene Lagepunkte ausgebildet werden.

In einer weiteren erfindungsgemäßen Ausführungsform weist der Flügel wenigstens einen ersten und einen zweiten Befestigungsabschnitt auf. Der erste Befestigungsabschnitt weist die zweite Stützeinrichtung und der zweite Befestigungsabschnitt weist die erste Stützeinrichtung auf. Der erste Befestigungsabschnitt ist zusätzlich mit der Strömungskörpersteuereinrichtung versehen, um den Strömungskörper in einer vorbestimmten Ebene zu führen.

Gemäß einer anderen erfindungsgemäßen Ausführungsform sind ein, mehrere oder alle Lagerpunkte der ersten und zweiten Stützeinrichtung und/oder der Strömungskörpersteuereinrichtung als sphärische Lager ausgebildet sind. Ein sphärisches Lager hat den Vorteil, dass es mehrere Bewegungsrichtungen erlaubt.

In einer weiteren erfindungsgemäßen Ausführungsform weist die Strömungskörpersteuereinrichtung wenigstens ein Steuerstangenelement auf. Das Steuerstangenelement hat den Vorteil, dass es einfach und kostengünstig in der Herstellung ist. Gemäß einer weiteren Ausführungsform der Erfindung ist der bewegliche Strömungskörper beispielsweise eine Landeklappe. Bei einer Landeklappe ist es besonders wichtig, dass diese eine vorbestimmte Bewegung ausführt, um beispielsweise nicht mit einer benachbarten Ladeklappe oder einem Teil des Flügels zu kollidieren.

Die Erfindung wird im Folgenden anhand von Ausführungsbeispielen unter Bezugnahme auf die beiliegenden Figuren näher erläutert.

Von den Figuren zeigen:
- Fig. 1: eine Ansicht eines Strömungskörpers eines Flugzeugflügels gemäß dem Stand der Technik;
- Fig. 2: eine Ansicht eines Strömungskörpers eines Flugzeugflügels gemäß der Erfindung;
- Fig. 3: ein Flugzeugflügels mit einer Landeklappe als Strömungskörper in einer Ausgangsposition und in einer ausgeklappten Position gemäß dem Stand der Technik;
- Fig. 4: ein Flugzeugflügels mit einer Landeklappe als Strömungskörper in einer Ausgangsposition und in einer ausgeklappten Position gemäß der Erfindung;
- Fig. 5a: eine schematische Ansicht einer Stützeinrichtung und eines Steuerstangenelements gemäß einer Ausführungsform der Erfindung;
- Fig. 5b: eine schematische Ansicht einer Stützeinrichtung und eines Steuerstangenelements gemäß einer weitren Ausführungsform der Erfindung;
- Fig. 6: eine Perspektivansicht einer Landeklappe gemäß dem Stand der Technik;
- Fig. 7: eine Perspektivansicht des erfindungsgemäßen Strömungskörpers;
- Fig. 8: ein Ausschnitt des Flugzeugflügels und der Landeklappe als Strömungskörper gemäß der Erfindung;
- Fig. 9: ein Ausschnitt A des oberen Befestigungsabschnitts des Strömungskörpers gemäß der Erfindung;
- Fig. 10: ein weiterer Ausschnitt des oberen Befestigungsabschnitts des Strömungskörpers gemäß der Erfindung;
- Fig. 11: eine Schnittansicht A-A durch den Strömungskörper in dem unteren Befestigungsabschnitt gemäß Fig. 2, mit seiner Strömungskörpersteuereinrichtung;
- Fig. 12: eine Schnittansicht B-B durch den Strömungskörper in dem unteren Befestigungsabschnitt mit seiner Stützeinrichtung gemäß Fig. 11.
- Fig. 13: eine Schnittansicht A-A durch den Strömungskörper in dem oberen Befestigungsabschnitt gemäß Fig. 2, mit seiner Stützeinrichtung und einer Strömungskörpersteuereinrichtung; und
- Fig. 14: eine Schnittansicht B-B durch den Strömungskörper in dem oberen Befestigungsabschnitt mit seiner Stützeinrichtung und seiner Strömungskörpersteuereinrichtung gemäß Fig. 11.

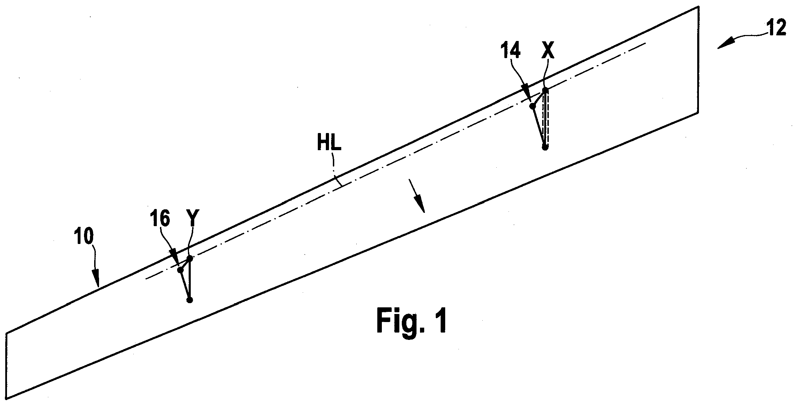

In Fig. 1 ist zunächst eine stark vereinfachte und rein schematische Ansicht eines beweglichen Strömungskörpers 10 eines Flugzeugflügels 12 gemäß dem Stand der Technik gezeigt.

Der bewegliche Strömungskörper 10 ist dabei eine Landeklappe. Der Strömungskörper 10 weist beispielsweise zwei erste und zweite Befestigungsabschnitte 14, 16 bzw. Stützeinrichtungen (sog. flap support) auf, an welchen der Strömungskörper 10 mit dem Flugzeugflügel 12 verbunden ist. Der erste Befestigungsabschnitt 14 bildet dabei beispielsweise den sog. master support bzw. den Hauptträger, welcher eine Seitenlast aufnimmt. Der zweite Befestigungsabschnitt 16 bildet wiederum z.B. den sog. moveable support bzw. den beweglichen Träger .

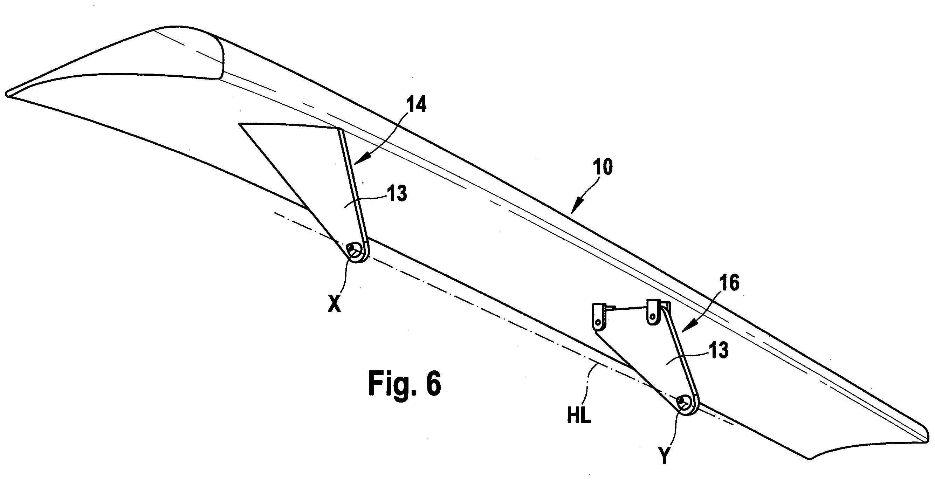

In nachfolgender Fig. 6 ist der Strömungskörper 10 mit den beiden Befestigungsabschnitten 14 und 16 nochmals in einer Perspektivansicht gezeigt. Die beiden Stützeinrichtungen 14, 16 sind dabei jeweils in einem Punkt X bzw. Y an dem Flugzeugflügel (nicht dargestellt) befestigt und bilden dabei jeweils einen Drehpunkt X bzw. Y für den Strömungskörper 10, wobei die beiden Drehpunkte X und Y eine Drehachse HL bilden, um welche der Strömungskörper 10 schwenkbar ist. Der erste Drehpunkt Y an dem zweiten Befestigungsabschnitt 16 weist dabei zwei Freiheitsgrade auf, während der zweite Drehpunkt X an dem ersten Befestigungsabschnitt 14 nur einen Freiheitsgrad aufweist. Der zweite Drehpunkt X verhindert hierbei, dass der Strömungskörper 10 sich längs zu der Drehachse HL bewegen kann, indem er nur einen Freiheitsgrad aufweist. Es soll dadurch sichergestellt werden, dass sich der Strömungskörper 10 insgesamt nur um die Drehachse HL schwenken lässt und keine laterale bzw. seitliche Bewegung des Strömungskörpers 10 möglich ist.

Bei dem in Fig. 1 gezeigten Strömungskörper 10, z.B. einer Landeklappe, bewegt sich der Strömungskörper 10 gemäß dem Stand der Technik um die Drehachse HL, wobei der Strömungskörper 10 sich dabei jedoch nur um diese Drehachse HL drehen kann. Die Bewegungsrichtung ist vorgegeben, wie mit einem Pfeil in Fig. 1 angedeutet ist.

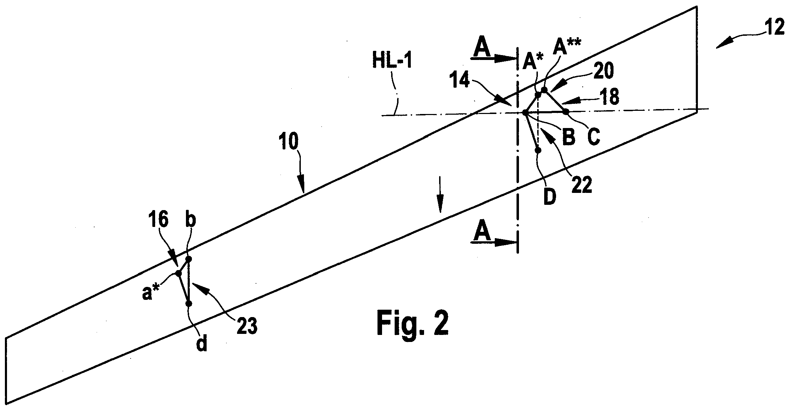

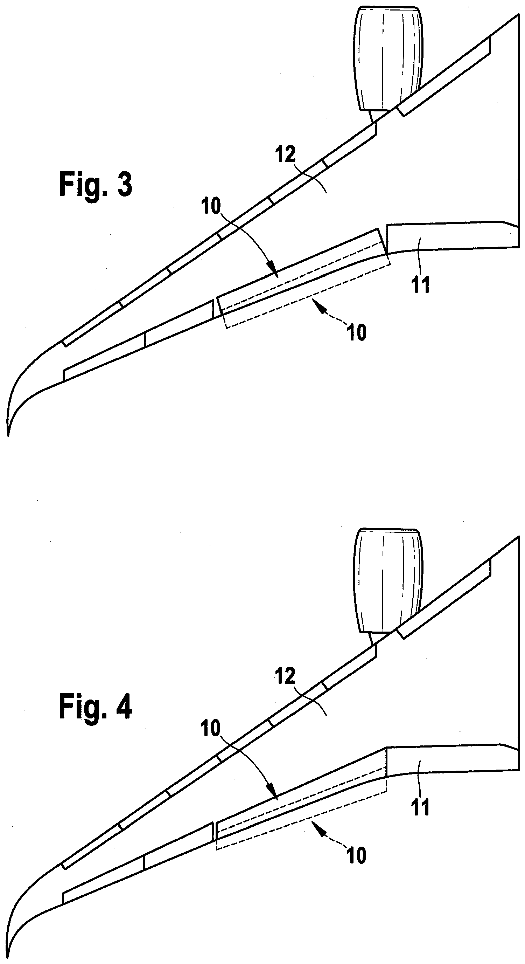

In Fig. 2, in welcher der Strömungskörper 10 gemäß der Erfindung gezeigt ist, kann der Strömungskörper 10 aber nun eine andere Bewegungsrichtung als die in Fig. 1 beschreiben, welche vor allem für Flugzeuglandeklappen an einem gepfeilten Flugzeugflügel vorteilhaft ist. Ein Beispiel für einen gepfeilten Flugzeugflügel ist z.B. in nachfolgenden Fig. 3 oder 4 gezeigt. In diesem Fall beschreibt der bewegliche Strömungskörper 10, z.B. eine Landeklappe, vorzugsweise eine Bewegung in Strömungsrichtung, wie in Fig. 2 mit einem Pfeil angedeutet ist. Die Bewegungsrichtung kann in bestimmten Grenzen beliebig vorgegeben werden, durch eine andere Anordnung der Achse HL-1, welche durch die Punkte C und B gebildet wird.

In Fig. 2 ist dabei eine stark vereinfachte und rein schematische Ansicht eines beweglichen Strömungskörpers 10 eines Flugzeugflügels 12 gemäß der Erfindung dargestellt. Der Strömungskörper 10 ist dabei beispielsweise eine Klappe bzw. ein Klappenelement z.B. eine Landeklappe.

Der Strömungskörper 10 weist dabei ebenfalls wenigstens zwei erste und zweite Befestigungsabschnitte 14, 16 bzw. bewegliche Stützeinrichtungen 22, 23 (sog. moveable flap support) auf, an welchen der Strömungskörper 10 mit dem Flugzeugflügel 12 verbunden ist. Dabei ist jedoch nur ein Befestigungsabschnitt in Form des ersten Befestigungsabschnitts 14, wie er im nachfolgenden noch näher beschrieben wird, ausgebildet. Es können auch mehr als zwei Befestigungsabschnitte zur Befestigung des Strömungskörpers 10 an dem Flugzeugflügel 12 vorgesehen werden, dabei ist, wie zuvor beschrieben, ein Befestigungsabschnitt als ein erster Befestigungsabschnitt 14 ausgebildet und die übrigen Befestigungsabschnitte in Form beispielsweise des zweiten Befestigungsabschnitts 16.

Der erste Befestigungsabschnitt 14 kann dabei am Flugzeugflügel innen bzw. "inboard" oder am Flugzeugflügel außen bzw. "outboard" angeordnet werden. Entsprechendes gilt für den zweiten Befestigungsabschnitt 16 und wahlweise zusätzliche weitere zweite Befestigungsabschnitte 16. Dieser jeweils zweite Befestigungsabschnitt 16 kann entsprechend am Flugzeugflügel außen bzw. "outboard" oder am Flugzeugflügel innen bzw. "inboard" angeordnet werden. Dies gilt für alle Ausführungsformen der Erfindung.

Die Stützeinrichtung 23 an dem zweiten Befestigungsabschnitt 16 ist dabei in den Punkten a* und d an dem Strömungskörper 10 befestigt und in dem Punkt b an dem Flugzeugflügel (nicht dargestellt). Weiter ist die Stützeinrichtung 22 an dem ersten Befestigungsabschnitt 14 in den Punkten A* und D an dem Strömungskörper 10 befestigt und in dem Punkt B an dem Flugzeugflügel (nicht dargestellt). Des Weiteren ist eine Strömungskörpersteuereinrichtung 18 vorgesehen, welche z.B. ein Steuerstangenelement 20 aufweist oder bildet. Das Steuerstangenelement 20 ist in einem Punkt C an dem Flugzeugflügel befestigt und bildet mit dem Punkt B der Stützeinrichtung 22 eine Drehachse HL-1, um welche die Stützeneinrichtung 22 drehbar ist. Dabei wird ein Punkt des Strömungskörpers 10 in einer durch das Steuerstangenelement 20 vorbestimmten Ebene bzw. einem Kreis um die Drehachse HL-1 bewegt. Die Ebene bzw. der Kreis bildet dabei z.B. eine Normale bzw. Senkrechte zu der Achse HL-1.

Des Weiteren ist das Steuerstangenelement 20 an dem Punkt A** an dem Strömungskörper 10 befestigt. Mit anderen Worten, die beiden Stützeinrichtungen 22 und 23 der Befestigungsabschnitte 14 und 16 bilden jeweils einen Drehpunkt für den Strömungskörper 10. Durch die Strömungskörpersteuereinrichtung 18 wird die Landeklappe 10 seitlich geführt und der Strömungskörper 10 dreht sich deswegen um eine virtuelle Achse (nicht dargestellt). Zusätzlich zur Drehung um den Punkt b kann die Stützeinrichtung 23 an dem zweiten Befestigungsabschnitt 16 auch eine Kippbewegung machen, hier z.B. in Spannweitenrichtung der Landeklappe 10, so dass der Strömungskörper 10 bzw. ein Punkt des Strömungskörpers 10 in der vorbestimmten Ebene um die Achse HL-1 bewegt werden kann.

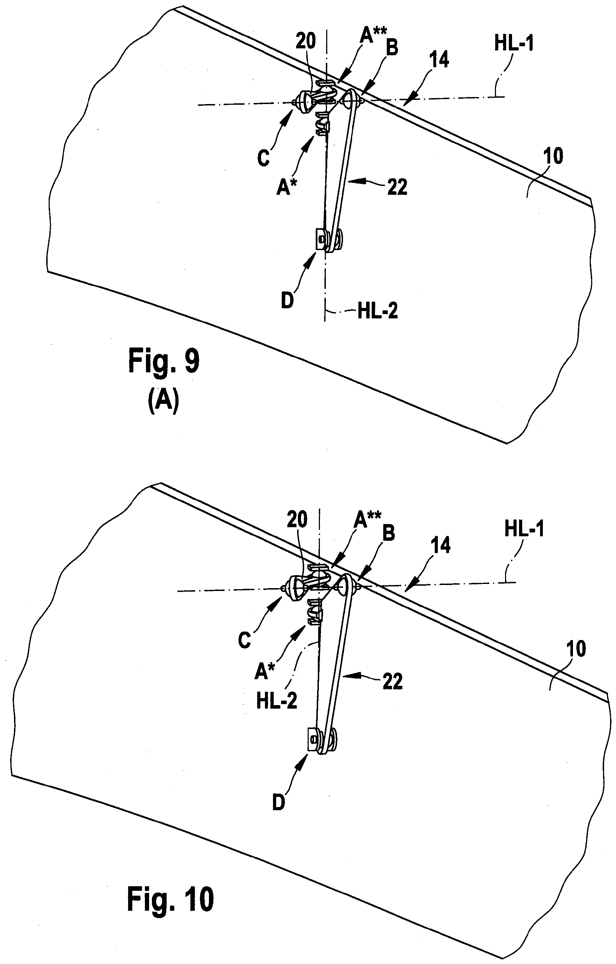

Um nun eine Bewegung des Strömungskörpers 10 in der vorbestimmten Ebene zu erzielen und dabei eine Bewegung des Strömungskörpers 10 axial der Drehachse bzw. eine laterale Bewegung zu verhindern, wird gemäß der Erfindung wenigstens eine Strömungskörpersteuereinrichtung 18 bzw. hier ein Steuerstangenelement 20 vorgesehen. Diese ist derart mit dem Strömungskörper 10 verbunden, so dass die Strömungskörpersteuereinrichtung 18 nur in einer vorbestimmten Ebene, um die entsprechende Achse HL-1 (s.h. hierzu auch nachfolgende Fig. 9) gedreht werden kann, und eine laterale bzw. axiale Bewegung des Strömungskörpers 10 dabei außerdem verhindert wird. Der Strömungskörper 10 dreht sich dabei nicht insgesamt um die Achse HL-1, sondern um eine virtuelle Achse. Nur ein sog. Punkt des Strömungskörpers 10 bewegt sich in der vorbestimmen Ebene um die Achse HL-1 bzw. wird in einer vorbestimmten Ebene bzw. einem Kreis um die Achse HL-1 durch das Steuerstangenelement 20 geführt.

Das Steuerstangenelement 20 dient dazu, die seitliche Bewegung des Strömungskörpers 10 zu verhindern. Des Weiteren nimmt das Steuerstangenelement 20 die Seitenlast des Strömungskörpers 10 auf und führt diese in die feste Flügelstruktur des Flugzeugflügels 12 ab. Der Strömungskörper 10 beschreibt dabei eine Bewegung z.B. in Flugrichtung (streamwise motion), oder in eine andere gewünschte Richtung, je nach Anordnung der Strömungskörpersteuereinrichtung 18 bzw. des Steuerstangenelements 20. Der Vorteil dieses Systems ist es, dass der Strömungskörper 10 an seinen Enden nur kleine oder keine zusätzlichen Spalte benötigt, die ansonsten im Flug einen aerodynamischen Widerstand erzeugen würden. Des Weiteren bedeutet der Wegfall der Spalte, dass die bisher hierfür notwendigen Bauteile entfallen und dadurch Gewicht und Kosten eingespart werden können.

Dieses Steuerstangenelement 20 ist stark vereinfacht und rein schematisch in Fig. 2 dargstellt. Das Steuerstangenelement 20 sorgt in Fig. 2 dafür, dass der Lager- bzw. Drehpunkt des ersten Befestigungsabschnitts 14 sich nur in einer vorbestimmten Ebene bewegen kann und damit der Strömungskörper 10.

Die Strömungskörpersteuereinrichtung 18 hat den Vorteil, dass der Strömungskörper 10 in einer definierten Ebene bewegt werden kann bzw. um eine virtuelle Achse. Auf diese Weise kann verhindert werden, dass der Strömungskörper 10 beispielsweise mit dem Flugzeugflügel 12 oder einem benachbarten Strömungskörper zusammenstoßen kann, aufgrund einer lateralen bzw. seitlichen Bewegung des Strömungskörpers 10. Des Weiteren wird das Entstehen eines größeren Spalts zwischen dem Strömungskörper und beispielsweise einem benachbarten Strömungskörper oder dem Flugzeugflügel 12 verhindert. Dadurch kann das aerodynamische Verhalten des Gesamtflügels 12 verbessert und der Verbrauch an Kraftstoff reduziert werden.

In Fig. 3 ist ein Flugzeugflügel 12 mit einer Landeklappe 10 als Strömungskörper 10 gemäß dem Stand der Technik gezeigt. Die Landeklappe 10 ist dabei mit einer durchgezogenen Linie in einer Ausgangsposition gezeigt und mit einer gestrichelten Linie in einer ausgeklappten bzw. ausgefahrenen Position. Wie zuvor mit Bezug auf Fig. 1 beschrieben wurde, kann sich der Strömungskörper 10 nur um seine feste Drehachse bewegen. Dies hat jedoch den Nachteil, wie in Fig. 3 angedeutet ist, dass die Landeklappe 10 in einer ausgeklappten bzw. ausgefahrenen Position ungewollt der benachbarten Landeklappe 11 in die Quere kommen kann, wobei sich die beiden Landeklappen 10, 11 im schlimmsten Fall gegenseitig berühren und dabei beschädigt werden können. Deshalb wird zwischen benachbarten Landeklappen 10, 11 normalerweise ein ausreichend großer Spalt vorgesehen, der ein ungewolltes gegenseitiges Berühren der Landeklappen 10, 11 verhindert.

Fig. 4 zeigt nun einen Flugzeugflügel 12 mit einer Landeklappe 10 als Strömungskörper 10 gemäß der Erfindung. Die Landeklappe 10 ist dabei ebenfalls mit einer durchgezogenen Linie in einer Ausgangsposition und mit einer gestrichelten Linie in einer ausgeklappten bzw. ausgefahrenen Position gezeigt. Wie zuvor mit Bezug auf Fig. 2 beschrieben wurde, beschreibt die Landeklappe 10 gemäß der Erfindung z.B. eine Bewegung in Strömungsrichtung, wenn diese ausgefahren wird. Dadurch wird ein in die Quere kommen mit der in Fig. 4 gezeigten benachbarten Landeklappe 11 verhindert. Des Weiteren kann auf einen Spalt zwischen den beiden Landeklappen 10, 11 verzichtet oder dieser im Vergleich zu der Lösung in Fig. 3 gemäß dem Stand der Technik, reduziert werden.

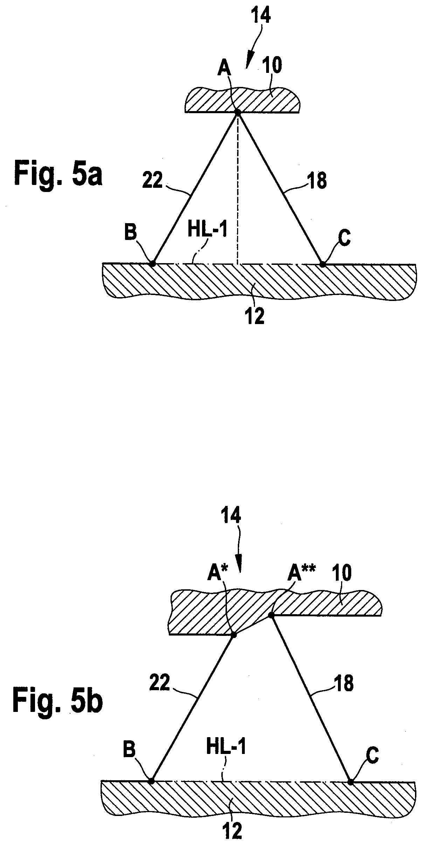

In Fig. 5a und 5b ist stark vereinfacht und rein schematisch das erfindungsgemäße Prinzip dargestellt. Beide Fig. 5a und 5b zeigen den ersten Befestigungsabschnitt 14 mit der Stützeinrichtung 22.

In Fig. 5a ist, wie zuvor beschrieben, die Stützeinrichtung 22 des ersten Befestigungsabschnitts 14 gezeigt, welche den Strömungskörper 10 betätigt bzw. bewegt. Die Stützeinrichtung 22 ist dabei an einem ersten Ende mit dem Strömungskörper 10 verbunden und bildet einen Lagerpunkt A. Des Weiteren ist die Stützeinrichtung 22 an einem zweiten Ende mit dem Flugzeugflügel 12 verbunden und bildet einen Lagerpunkt B. Die Stützeinrichtung 22 bildet dabei an ihrem zweiten Ende mit dem Lagerpunkt B einen Drehpunkt, um den sie den Strömungskörper 10 schwenkt bzw. dreht. Um nun eine Bewegung der Stützeinrichtung 22 und damit des Strömungskörpers 10 in einer vorbestimmten Ebene zu gewährleisten, ist gemäß der Erfindung die Strömungskörpersteuereinrichtung 18 vorgesehen. Die Strömungskörpersteuereinrichtung 18 kann dabei beispielsweise in Form eines Steuerstangenelements 20 ausgebildet sein oder dieses aufweisen. Dieses Steuerstangenelement 20 bildet mit der Stützeinrichtung 22 eine Art Dreieck oder mit anderen Worten das Steuerstangenelement 20 stützt die Stützeinrichtung 22 seitlich bzw. axial oder mit anderen Worten in lateraler Richtung.

Das Steuerstangenelement 20 ist dabei an seinem ersten, oberen Ende mit dem oberen bzw. ersten Ende der Stützeinrichtung 22 z.B. an dem gemeinsamen Punkt A an dem Strömungskörper 10 befestigt. Des Weiteren ist das Steuerstangenelement 20 an seinem unteren, zweiten Ende an dem Flugzeugflügel 12 befestigt und bildet einen Lagerpunkt C. Die beiden unteren Lagerpunkte B und C der Stützeinrichtung 22 und des Steuerstangenelements 20 bilden dabei eine gemeinsame Achse HL-1, um die der Strömungskörper 10 geschwenkt wird und zwar in der Ebene in welcher der gemeinsame Punkt A liegt. Mit anderen Worten, der Punkt A des Strömungskörpers 10 bewegt sich in einem Kreis um die Achse HL-1, wobei der Kreis bzw. die Ebene die der Kreis bildet senkrecht zu der Achse HL-1 liegt.

Wie in Fig. 5b gezeigt ist, kann das Steuerstangenelement 20 alternativ auch mit seinem oberen, ersten Ende an einem ersten Punkt A** des Strömungskörpers 10 befestigt sein und das obere, erste Ende der Stützeinrichtung 22 getrennt davon an einem zweiten Punkt A* an dem Strömungskörper 10 befestigt sein.

An ihren beiden unteren bzw. zweiten Enden sind die Stützeinrichtung 22 und das Steuerstangenelement 20 an dem Flugzeugflügel 12 befestigt und bilden jeweils ebenfalls einen Lagerpunkt bzw. Drehpunkt B, C. Die beiden unteren Lagerpunkte B und C der Stützeinrichtung 22 und des Steuerstangenelements 20 bilden dabei die gemeinsame Drehachse HL-1, um welchen die Strömungskörpersteuereinrichtung 18 gedreht werden kann. Des Weiteren stellt das Steuerstangenelement 20 sicher, dass die Stützeinrichtung 22 bzw. deren oberes, erstes Ende welches den Lagerpunkte A* mit dem Strömungskörper 10 bildet, nur in einer vorbestimmten Ebene geschwenkt werden kann und damit der Strömungskörper 10. Der Strömungskörper 10 wird dabei um eine virtuelle Drehachse geschwenkt und dabei in einer Ebene senkrecht zur der Achse HL-1 geführt.

In Fig. 6 ist eine Perspektivansicht einer Landeklappe gemäß dem Stand der Technik dargestellt, wobei die Befestigungsabschnitte 14, 16 der Landeklappe dabei stark vereinfacht und rein schematisch dargestellt sind. Dabei ist einmal der erste Befestigungsabschnitt 14 (hier der sog. master support) und der zweite Befestigungsabschnitt 16 (hier der sog. slave support) der Landeklappe zur Befestigung den dem Flugzeugflügel gezeigt. Der erste Befestigungsabschnitt 14 weist dabei eine Befestigung 13 auf, die an einem Ende fest mit der Landeklappe 10 verbunden ist und an dem anderen Ende drehbar mit dem Flugzeugflügel (nicht dargestellt) verbunden ist und mit diesem einen Drehpunkt X bildet.

Der zweite Befestigungsabschnitt 16 weist wiederum eine Befestigung 13 auf, die an ihrem einen Ende an zwei Punkten an der Landeklappe drehbar befestigt ist und an ihrem anderen Ende drehbar an dem Flugzeugflügel (nicht dargestellt) befestigt ist und mit diesem einen Drehpunkt Y bildet. Die beiden Drehpunkte X und Y des ersten und zweiten Befestigungsabschnitts 14, 16 bilden dabei eine Drehachse HL. Die Landeklappe 10 hat dabei den Nachteil, dass sie sich nur senkrecht zu ihrer Drehachse HL bewegen kann, wie zuvor in Fig. 1 und 3 gezeigt ist, da der erste Befestigungsabschnitt 14 eine seitliche Bewegung verhindert.

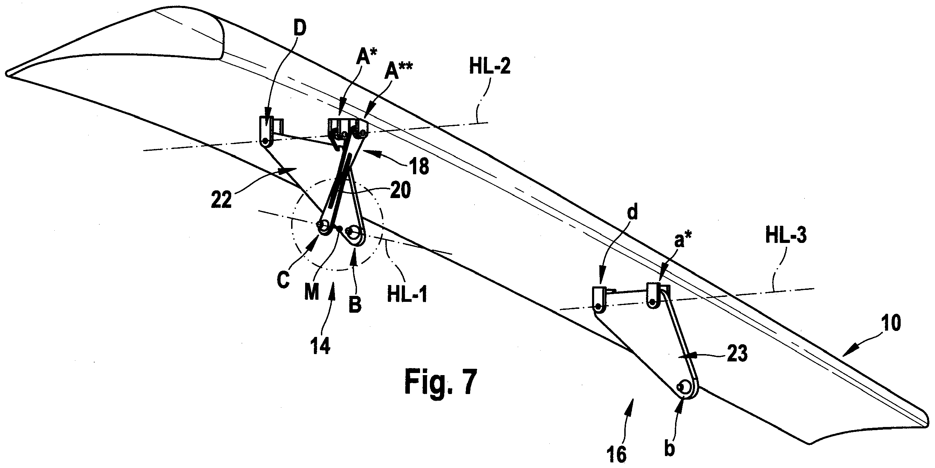

Fig. 7 zeigt nun eine Perspektivansicht des erfindungsgemäßen Strömungskörpers 10, im vorliegenden Fall z.B. eine Landeklappe 10. Die Befestigungsabschnitte 14, 16 der Landeklappe 10 sind dabei stark vereinfacht, nicht maßstäblich und rein schematisch dargestellt. Das Beispiel in Fig. 7 entspricht dabei im Wesentlichen dem in Fig. 5b dargestellten Prinzip. Dabei ist der erste Befestigungsabschnitt 14 (hier der sog. master support) und der zweite Befestigungsabschnitt 16 (hier der sog. slave support) der Landeklappe 10 zur Befestigung an dem Flugzeugflügel (nicht dargestellt) gezeigt.

Der zweite Befestigungsabschnitt 16 weist, wie in Fig. 7 gezeigt ist, eine Befestigung, hier eine Stützeinrichtung 23 auf, die an ihrem einen Ende z.B. an zwei Punkten a* und d an der Landeklappe 10 befestigt bzw. gelagert ist und die Lagerpunkte a* und d bildet. Des Weiteren ist die Stützeinrichtung 23 an ihrem anderen Ende in einem Punkt b an dem Flugzeugflügel (nicht dargestellt) befestigt bzw. gelagert, und bildet mit diesem einen Lager- bzw. Drehpunkt b.

Weiter weist der erste Befestigungsabschnitt 14 eine Befestigung auf, hier eine Stützeinrichtung 22, die an beispielsweise zwei Punkten A* und D an der Landeklappe 10 befestigt bzw. gelagert ist und die Lagerpunkte A* und D bilden. An ihrem unteren Ende ist die Stützeinrichtung 22 an einem Punkt B an dem Flugzeugflügel (nicht dargestellt) befestigt bzw. gelagert und bildet mit diesem den Lager- bzw. Drehpunkt B. Gemäß der Erfindung ist nun eine zusätzliche Strömungskörpersteuereinrichtung 18 z.B. in Form eines Steuerstangenelements 20 an dem ersten Befestigungsabschnitt 14 vorgesehen. Das Steuerstangenelement 20 ist dabei in dem Beispiel in Fig. 7 mit seinem oberen, ersten Ende an einem Punkt A** an dem Strömungskörper 10 befestigt bzw. gelagert und bildet mit diesem den Lagerpunkt A**. Des Weiteren ist das Steuerstangenelement 20 an seinem zweiten, unteren Ende in einem Punkt C an dem Flugzeugflügel (nicht dargestellt) befestigt bzw. gelagert. Die beiden unteren Lagerpunkte C und B des Steuerstangenelements 20 und der Stützeinrichtung 22 des ersten Befestigungsabschnitts 14 bilden dabei eine gemeinsamen Achse HL-1, um welchen die Strömungskörpersteuereinrichtung 18 drehbar ist und der Strömungskörper 10 führbar ist.

Des Weiteren können die Lagerpunkte A*, D und A** der Stützeinrichtung 22 und des Steuerstangenelements 20 des ersten Befestigungsabschnitts 14 auf einer gemeinsamen Achse HL-2 liegen, wie in Fig. 7 angedeutet ist. Der Lagerpunkt A** des Steuerstangenelements 20 muss aber nicht auf der Achse HL-2 der Lagerpunkte A* und D der Stützeinrichtung 22 liegen, sondern kann auch an einer anderen Position an dem Strömungskörper 10 vorgesehen sein. Des Weiteren bilden die Lagerpunkte a* und d der Stützeinrichtung 23 des zweiten Befestigungsabschnitts 16 eine gemeinsamen Achse HL-3.

Die erfindungsgemäße Landeklappe 10 hat dabei den Vorteil, dass sie in einer definierten Richtung bzw. z.B. in Strömungsrichtung bewegt werden kann, wie zuvor in Fig. 2 und 4 gezeigt ist. Mit anderen Worten die Landeklappe 10 wird z.B. senkrecht zu der Achse HL-1 geführt, weil die Strömungskörpersteuereinrichtung 18 sich nur um diese Achse drehen kann..

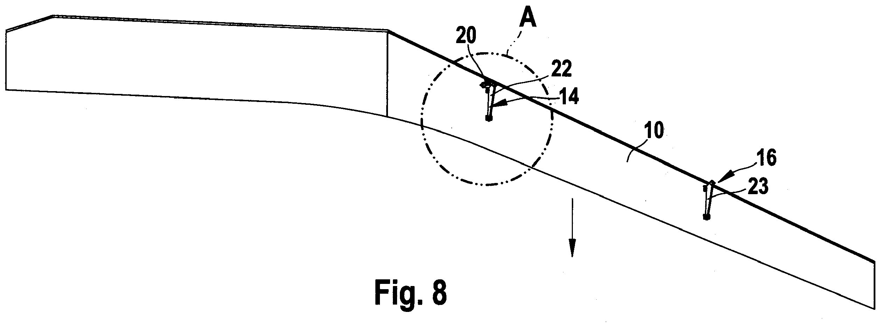

Des Weiteren ist in Fig. 8 ein Ausschnitt des Flugzeugflügels und der Landeklappe als Strömungskörper gemäß der Erfindung gezeigt. Dabei ist der zweite Befestigungsabschnitt 16 mit seiner Stützeinrichtung 23 gezeigt und der erste Befestigungsabschnitt 14 mit seiner Stützeinrichtung 22 und dem zusätzlichen Steuerstangenelement 20.

In Fig. 9 ist weiter ein vergrößerter Ausschnitt A des ersten Befestigungsabschnitts 14 des Strömungskörpers 10 gemäß der Erfindung gezeigt.

Dabei ist die Stützeinrichtung 22 in den Punkten A* und D an dem Strömungskörper 10 bzw. hier der Landeklappe 10 befestigt bzw. gelagert. Ein oder beide Lagerpunkte A* und D könnend dabei in Form von sphärischen Lagern ausgebildet sein. Entsprechendes gilt auch für die Befestigung der Stützeinrichtung 22 an dem Flugzeugflügel (nicht dargestellt) in dem Punkt B. Der Lagerpunkt B ist vorzugsweise ebenfalls als ein sphärisches Lager ausgebildet. Das Steuerstangenelement 20 ist in dem Punkt A** an dem Strömungskörper 10 befestigt bzw. gelagert und liegt beispielsweise auf der Achse HL-2 welche durch die Lagerpunkte A* und D der Stützeinrichtung 22 gebildet wird. Dies ist aber nicht unbedingt notwendig. Der Punkt A* der Stützeinrichtung 22 und der Punkt A** des Steuerstangenelements 20 können auch in einem Punkt zusammengefügt bzw. zusammengefasst werden, wie zuvor beispielhaft in Fig. 5a gezeigt ist.

Weiter ist das Steuerstangenelement 20 in dem Punkt C an dem Flugzeugflügel befestigt bzw. gelagert und bildet die Achse HL-1 mit dem Lagerpunkt B der Stützeinrichtung 22. Dabei können auch die Lagerpunkte A** und C des Steuerstangenelements 20 als sphärische Lager ausgebildet sein.

In Fig. 10 ist ein weiterer Ausschnitt des ersten Befestigungsabschnitts 14 des Strömungskörpers 10 gemäß der Erfindung gezeigt. Darin liegen die Befestigungs- bzw. Lagerpunkte A* und D der Stützeinrichtung 22 an dem Strömungskörper 10 und der Befestigungs- bzw. Lagerpunkt A** des Steuerstangenelements 20 an dem Strömungskörper 10 beispielsweise auf der gemeinsamen Achse HL-2. Wie zuvor beschrieben, kann der Lagerpunkt A** des Steuerstangenelements 20 auch nicht auf der Achse HL-2 liegen, welche durch die Lagerpunkte A* und D der Stützeinrichtung 22 gebildet wird. Der Befestigungs- bzw. Lagerpunkt B der Stützeinrichtung 22 und der Befestigungs- bzw. Lagerpunkt C des Steuerstangenelements 20 bilden die Achse HL-1. Der Strömungskörper 10 bzw. die Landeklappe 10 dreht sich gemäß der Erfindung um eine nicht dargestellte virtuelle Drehachse (sog. virtuelle hingeline). Die sog. Hauptebene (sog. masterplane) ist im gezeigten Beispiel senkrecht zu der mit Hilfe des Steuerstangenelements 20 definierten Achse HL-1. Der Strömungskörper 10 bzw. die Landeklappe 10 wird in dieser Ebene bzw. Hauptebene geführt. Mit anderen Worten, ein Punkt des Strömungskörpers 10 bewegt sich in der Ebene bzw. Hauptebene um die Achse HL-1. D.h. dieser Punkt liegt dabei in der Hauptebene, in welcher der Strömungskörper 10 geführt wird.

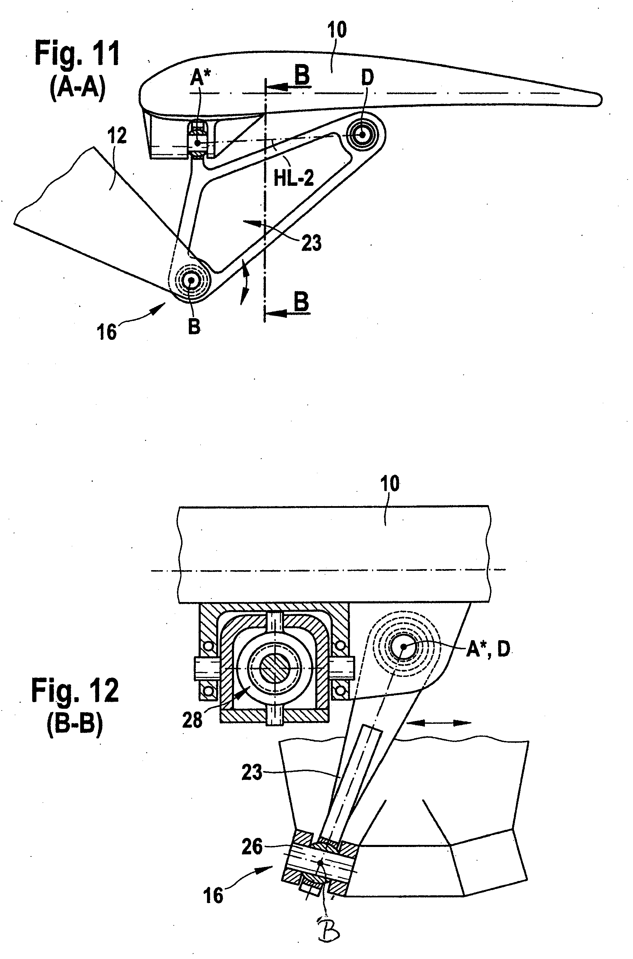

Fig. 11 zeigt ein weiteres Ausführungsbeispiel der Erfindung. In Fig. 11 ist dabei eine Schnittansicht A-A an dem zweiten Befestigungsabschnitt 16 (Fig. 2) durch den erfindungsgemäßen, beweglichen Strömungskörper 10 gemäß Fig. 2 gezeigt, sowie dessen Stützeinrichtung 23. Die Stützeinrichtung 23 ist dabei nicht in Form einer massiven Platte ausgebildet, wie in Fig. 7 gezeigt ist, sondern ist z.B. in Form eines Rahmens ausgebildet. Dies ist jedoch lediglich ein weiteres Beispiel, wie die Stützeinrichtung 23 ausgebildet werden kann. Die Erfindung ist nicht auf die gezeigten Ausführungsformen der Stützeinrichtung 23 beschränkt. Die zu der Stützeinrichtung 23 des zweiten Befestigungsabschnitts 16 gemachten Ausführungen gelten hierbei entsprechend für die Stützeinrichtung 22 des ersten Befestigungsabschnitts 14 und werden nicht wiederholt.

Wie in Fig. 11 gezeigt ist, ist an dem zweiten Befestigungsabschnitt 16 an dem Strömungskörper 10 nur die Stützeinrichtung 23 vorgesehen und keine Strömungskörpersteuereinrichtung. Das obere, erste Ende der Stützeinrichtung 23 ist dabei an einem ersten Punkt A* an dem Strömungskörper 10 befestigt bzw. gelagert und bildet den Lagerpunkt A*. Weitere ist das obere, zweite Ende der Stützeinrichtung 23 an einem zweiten Punkt D an dem Strömungskörper 10 befestigt und bildet den Lagerpunkt D. Die beiden oberen Lagerpunkte A* und D der Stützeinrichtung bilden dabei die gemeinsamen Achse HL-2.

Des Weiteren ist die Stützeinrichtung 23 mit ihrem unteren, zweiten Ende an dem Flugzeugflügel 12 in einem zweiten Punkt B an dem Flugzeugflügel 12 befestigt bzw. gelagert. Der Strömungskörper 10 kann sich dadurch an dem zweiten Befestigungsabschnitt 16 einmal um den Punkt B drehen. In dem Fall, dass der Punkt B bzw. der Lagerpunkt B als ein sphärisches Lager ausgebildet ist, erlaubt das sphärische Lager prinzipiell die Rotation in alle drei Richtungen bzw. um alle drei Achsen. Dabei ist die Hauptdrehrichtung aber in Richtung des Pfeils, wie in Fig. 11 angedeutet ist, und in axialer Richtung (z.B. in die Bildebene oder aus der Bildebene heraus). Als Lager für die Lagerpunkte A* und D können ebenfalls beispielsweise sphärische Lager vorgesehen werden. Die Erfindung ist aber nicht auf sphärische Lager für die Lagerpunkte A*, B und D beschränkt. Es kann auch jede andere Art von geeigneten Lagern bzw. Lagerungen vorgesehen werden, wobei die Lagerpunkte A*, B und D jeweils die gleiche Lagerung oder eine unterschiedliche Lagerung aufweisen können. Die Stützeinrichtung 23 in Form eines Rahmens weist in Fig. 11 z.B. eine Bügelform oder eine Dreiecksform auf. Das hat den Vorteil, dass die Stützeinrichtung 23 eine besonderes gute Stabilität aufweist. Grundsätzlich kann die Stützeinrichtung 23 aber beispielsweise auch nur wenigstens ein Stützstangenelement aufweisen (nicht dargestellt), dass die Verbindung der beiden Lagerpunkte A* und B bildet. Es können hierbei auch weitere Stützstangenelemente bei der Stützeinrichtung 23 vorgesehen werden, beispielsweise Stützstangenelemente die die Verbindung der Lagerpunkte B und D, sowie A* und D bilden, um nur zwei Beispiele zu nennen. Die zu der Stützeinrichtung 23 des zweiten Befestigungsabschnitts 16 gemachten Ausführungen gelten hierbei ebenfalls entsprechend für die Stützeinrichtung 22 des ersten Befestigungsabschnitts 14 und werden nicht wiederholt.

In Fig. 12 ist weiter eine Schnittansicht B-B an dem zweiten Befestigungsabschnitt 16 (Fig. 2) durch den erfindungsgemäßen beweglichen Strömungskörper 10 in Fig. 11 dargestellt und dessen Stützeinrichtung 22. Der Strömungskörper 10 kann dabei beispielsweise eine Klappe, z.B. eine Landeklappe, sein, wie zuvor beschrieben. Fig. 11 zeigt den Strömungskörper 10, den Flugzeugflügel 12 und die Stützeinrichtung 23 dabei von der Seite, während Fig. 12 den Strömungskörper 10, den Flugzeugflügel 12 und die Stützeinrichtung 23 von der Rückseite aus zeigt bzw. von vorne gesehen.

Die Stützeinrichtung 23 ist dabei an ihrem oberen Ende z.B. an zwei Positionen an dem Strömungskörper 10 befestigt. Hierbei bildet die Stützeinrichtung 23 die beiden Lagerpunkte A* und D als Befestigungspunkte an dem Strömungskörper 10 aus, wie zuvor auch in Fig. 11 gezeigt. Die Stützeinrichtung 23 kann dabei, wie in Fig. 12 gezeigt ist, um einen vorbestimmten Winkel geneigt an dem Flugzeugflügel 12 und dem Strömungskörper 10 angebracht sein oder auch beispielsweise in einem Winkel von 90° bzw. Senkrecht oder im Wesentlichen senkrecht (nicht dargestellt) an dem Flugzeugflügel 12 und dem Strömungskörper 10 befestigt sein.

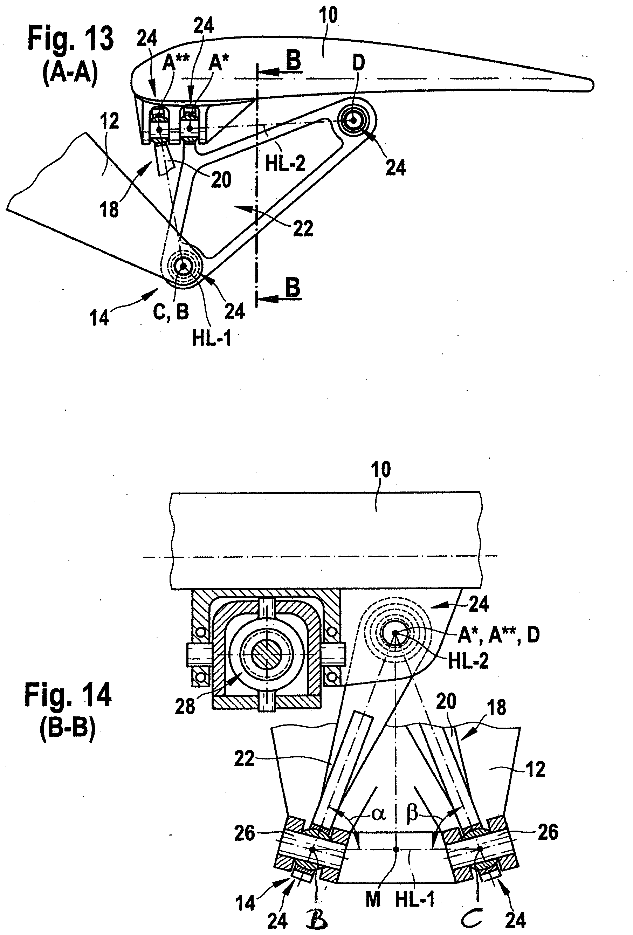

Des Weiteren ist die Stützeinrichtung 23 an ihrem unteren Ende an dem Flugzeugflügel 12 in dem Lagerpunkt C befestigt. Die Stützeinrichtung kann sich dabei einmal um den Lagerpunkt C drehen und außerdem seitlich bzw. axial oder lateral bewegen, wie mit dem Pfeil in Fig. 12 angedeutet ist. Der Lagerpunkt C weist hierbei beispielsweise ein sphärisches Lager auf, das mit einem Bolzenelement 26 befestigt ist. Die Darstellung in Fig. 12 und nachfolgender Fig. 14 der Lagerpunkte A*, A**, B, C und D ist dabei stark vereinfacht und rein schematisch. Des Weiteren wird der Strömungskörper 10 in Fig. 12 über wenigstens eine oder mehrere Antriebseinrichtungen 28 bewegt. Die Darstellung der Antriebseinrichtung und ihre Positionierung an dem Flugzeugflügel 12 ist dabei rein beispielhaft und stark vereinfacht dargestellt. Die Erfindung ist nicht auf diese Antriebseinrichtung und ihre Positionierung beschränkt.

In Fig. 13 ist nun eine Schnittansicht A-A an dem ersten Befestigungsabschnitt 14 durch den erfindungsgemäßen, beweglichen Strömungskörper 10 gemäß Fig. 2 gezeigt und dessen Stützeinrichtung 22 und Strömungskörpersteuereinrichtung 18. Bei diesem Strömungskörper 10 ist dabei das Steuerstangenelement 20 mit seinem oberen, ersten Ende an einem ersten Punkt A** des Strömungskörpers 10 befestigt bzw. gelagert. Des Weiteren ist das obere, erste Ende der Stützeinrichtung 22 an einem zweiten Punkt A* an dem Strömungskörper 10 befestigt bzw. gelagert. Die beiden oberen Lagerpunkte A** und A* des Steuerstangenelements 20 und der Stützeinrichtung 22 können dabei , wie in dem Beispiel in Fig. 13 gezeigt ist, auf einer gemeinsamen Achse HL-2 liegen, gebildet durch die Punkte A* und D der Stützeinrichtung 22. Dies ist aber nicht unbedingt notwendig. Der Lagerpunkt A** des Steuerstangenelements 20 kann auch an einer andren Position außerhalb der Achse HL-2 angeordnet sein.

Weiter ist das Steuerstangenelement 20 mit seinem unteren, zweiten Ende an einem ersten Punkt C des Flugzeugflügels 12 befestigt bzw. gelagert. Das untere, zweite Ende der Stützeinrichtung 22 ist ebenfalls an einem zweiten Punkt B an dem Flugzeugflügel 12 befestigt bzw. gelagert. Die beiden unteren Lagerpunkte C und B des Steuerstangenelements 20 und der Stützeinrichtung 22 bilden eine gemeinsame Achse HL-1, um welche die Strömungskörpersteuereinrichtung 18 drehbar bzw. schwenkbar ist. Des Weiteren stellt das Steuerstangenelement 20 sicher, dass der Strömungskörper 10 in einer vorbestimmten Ebene um die Achse HL-1 geführt wird. Die Ebene um die der Strömungskörper 10 geführt wird, wird dabei durch die Senkrechte zu der Achse HL-1 in dem Beispiel in Fig. 10 bestimmt.

In dem Beispiel, wie es in Fig. 13 gezeigt ist, weist die Stützeinrichtung 22 beispielsweise die Form eines Bügels auf, wobei die Stützeinrichtung 22 z.B. an zwei Punkten an dem Strömungskörper 10 befestigt ist und hierbei die Lagerpunkte A* und D bildet. Des Weiteren ist die Stützeinrichtung 22 an einem Punkt an dem Flugzeugflügel 12 befestigt und bildet dort den Lagerpunkt B. Die Stützeinrichtung 22 hat den Vorteil, dass durch die Bügelform und die beiden Befestigungspunkte bzw. Lagerpunkte A* und D an dem Strömungskörper 10 die Stabilität weiter erhöht werden kann.

Des Weiteren ist die Strömungskörpersteuereinrichtung 18 vorgesehen, wobei diese beispielsweise in Form eines Steuerstangenelements 20 ausgebildet ist. Das Steuerstangenelement 20 ist dabei mit seinem oberen Ende an einem Punkt an dem Strömungskörper 10 befestigt und bildet hierbei den Lagerpunkt A**. Die beiden Lagerpunkte A* und D der Stützeinrichtung 22 und der Lagerpunkt A** des Steuerstangenelements 20 liegen dabei vorzugsweise auf einer gemeinsamen Achse HL-2, welche, wie zuvor beschrieben, durch die Lagerpunkte A* und D der Stützeinrichtung 20 gebildet wird. Der Lagerpunkt A** des Steuerstangenelements 20 kann aber auch an einer anderen Position außerhalb der Achse HL-2 angeordnet werden.

Das untere Ende des Steuerstangenelements 20 ist des Weiteren an dem Flugzeugflügel 12 befestigt und bildet hierbei den Lagerpunkt C. Die Lagerpunkte B und C, mit welchen die Stützeinrichtung 22 und das Steuerstangenelement 20 an dem Flugzeugflügel 12 befestigt sind, bilden eine gemeinsame Achse HL-1, um welche die Strömungskörpersteuereinrichtung 18 gedreht wird. Der Strömungskörper 10 wird dabei durch das Vorsehen der Strömungskörpersteuereinrichtung 18 bzw. deren Steuerstangenelements 20 in einer vorbestimmten Ebene senkrecht zu der Achse HL-1 geführt,. Dabei verhindert das Steuerstangenelement 20 eine unerwünschte laterale bzw. axiale Bewegung des Strömungskörpers 10. Dadurch können für die Lagerpunkte A*, A**, B, C und/oder D jeweils sphärisches Lager 24 vorgesehen werden. Die Lagerpunkte können optimal über entsprechende Bolzenelemente 26 verstiftet werden, so dass solche sphärischen Lager 24 vorgesehen werden können. Es kann aber auch jede andere geeignete Lagerung bzw. jedes andere geeignete Lager vorgesehen werden. Die Erfindung ist nicht auf eine sphärische Lagerung bzw. ein sphärisches Lager 24 beschränkt.

Des Weiteren ist in Fig. 14 eine Schnittansicht B-B an dem ersten Befestigungsabschnitt 14 durch den erfindungsgemäßen beweglichen Strömungskörper 10 in Fig. 13 dargestellt und dessen Stützeinrichtung 22 und Strömungskörpersteuereinrichtung 20.

Wie zuvor beschrieben, kann der Strömungskörper 10 beispielsweise eine Klappe, z.B. eine Landeklappe sein. Während der Strömungskörper 10 und der Flugzeugflügel 12 in Fig. 13 in einer Seitenschnittansicht gezeigt sind, so zeigt Fig. 14 den Strömungskörper 10 und den Flugzeugflügel 12 von der Vorderseite aus. Fig. 14 zeigt hierbei den Lagerpunkt B an welchem die Stützeinrichtung 22 mit ihrem unteren Ende an dem Flugzeugflügel 12 befestigt ist. Des Weiteren ist die Stützeinrichtung 22 an ihrem oberen Ende z.B. an zwei Positionen bzw. zwei Punkten A* und D an dem Strömungskörper 10 befestigt. Dabei bildet die Stützeinrichtung 22 die beiden Lagerpunkte A* und D als Befestigungspunkte an dem Strömungskörper 10 aus. Die Stützeinrichtung 22 kann dabei, wie in Fig. 14 gezeigt ist, um einen vorbestimmten Winkel α zu einer Achse HL-1 geneigt an dem Flugzeugflügel 12 und dem Strömungskörper 10 angebracht sein oder auch beispielsweise in einem Winkel von 90° bzw. Senkrecht oder im Wesentlichen senkrecht (nicht dargestellt) zu der Achse HL-1 an dem Flugzeugflügel 12 und dem Strömungskörper 10 befestigt sein. Die Achse HL-1 wird dabei durch den Punkte B gebildet an welchem die Stützeinrichtung 22 an dem Flügel 12 befestigt ist und durch den Punkt C an welchem die Strömungskörpersteuereinrichtung 18 bzw. das Steuerstangenelement 20 an dem Flügel 12 befestigt ist.

Des Weiteren ist die Strömungskörpersteuereinrichtung 18 bzw. deren Steuerstangenelement 20 so zu der Stützeinrichtung 22 positioniert, dass der Strömungskörper 10 in einer vorbestimmten Ebene geführt wird und außerdem eine unerwünschte laterale bzw. axiale Bewegung des Strömungskörpers 10 verhindert wird. Die Strömungskörpersteuereinrichtung 18 bzw. deren Steuerstangenelement 20 ist hierzu in einem entsprechenden Winkel β geneigt zu der Stützeinrichtung 22 bzw. der Achse HL-1 angeordnet bzw. so positioniert, dass die Strömungskörpersteuereinrichtung 18 die Stützeinrichtung 22 seitlich bzw. axial abstützt. Mit anderen Worten, die Strömungskörpersteuereinrichtung 18 und die Stützeinrichtung 22 sind in verschiedenen Ebenen angeordnet und nicht in derselben Ebene.

Die Strömungskörpersteuereinrichtung 18 bzw. deren Steuerstangenelement 20 ist dabei an ihrem unteren Ende an dem Flugzeugflügel 12 befestigt und bildet dabei den zuvor genannten Lagerpunkt C. An ihrem oberen Ende ist das Steuerstangenelement 20 an dem Strömungskörper 10 in dem Lagerpunkt A** befestigt. Die beiden Lagerpunkte B und C, in welchen die Stützeinrichtung 22 und das Steuerstangenelement 20 an dem Flugzeugflügel 12 befestigt sind, bilden die zuvor genannte Achse HL-1, um welche die Strömungskörpersteuereinrichtung 18 gedreht wird. Die Lagerpunkte A* und C in welchen die Stützeinrichtung 22 an dem Strömungskörper 10 befestigt ist bilden die Achse HL-2, wobei der Lagerpunkt A** in welchem das Steuerstangenelement 20 an dem Strömungskörper 10 befestigt ist, auf der Achse HL-2 liegt, was aber nicht zwingend notwendig ist. Der Strömungskörper 18 wird dabei durch das Steuerstangenelement 20 in einer Ebene um die Achse HL-1 geführt. Die Ebene schneidet dabei die Achse HL-1 in dem virtuellen Drehpunkt M auf der Achse HL-1.

In Fig. 14 ist des Weiteren beispielhaft eine Antriebseinrichtung 28 gezeigt zum Betätigen bzw. Schwenken des Strömungskörpers 10 mittels der Stützeinrichtung 22. Diese Antriebseinrichtung 28 ist jedoch lediglich beispielhaft und die Erfindung ist nicht auf diese spezielle Ausführung und deren Anordnung bzw. Positionierung beschränkt.

Der Strömungskörper 10, wie er zuvor anhand der Fig. 13 und 14 beschrieben wurde, ist, wie zuvor in Fig. 2 gezeigt, an wenigstens zwei Befestigungsabschnitten 14, 16 bzw. beweglichen Stützeinrichtungen (moveable flap support) mit dem Flugzeugflügel 12 verbunden. Der Strömungskörper 10 bildet an einem ersten Befestigungsabschnitt 14 über die Stützeinrichtung 22 und das Steuerstangenelement 20 die Lagerpunkte B und C.

Der Strömungskörper 10 wird in einer vorbestimmten Ebene in einem Punkt um die Achse HL-1 geführt, welche durch die Punkte bzw. Befestigungs- oder Lagerpunkte B und C der Stützeinrichtung 22 und des Steuerstangenelements 20 gebildet wird. Insgesamt wird der Strömungskörper 10 dabei um eine virtuelle Achse gedreht, wobei der Punkt des Strömungskörpers 10 in der vorbestimmten Ebene um die Achse HL-1 geführt wird.

Mit anderen Worten, die Lagerpunkte B und C an dem Befestigungsabschnitt 14 (movable flap supports) führen den Strömungskörper 10 über die virtuelle Drehachse (hinge line), wobei die axiale Richtung zunächst frei ist, wie zuvor mit Bezug auf Fig. 2 erläutert wurde. Die axiale Richtung wird durch die Befestigung des Steuerstangenelements 20 an dem Strömungskörper 10 anschließend beschränkt. Das Moment um die virtuelle Drehachse wird von einer oder mehreren Antriebseinrichtungen 28 übernommen bzw. aufgebracht, wie sie beispielhaft in Fig. 14 gezeigt ist. Die Antriebseinrichtung 28 kann dabei beispielsweise wenigsten einen oder mehrere Spindelantriebe bzw. Drehantriebe oder Linearantriebe aufweisen, um nur drei Beispiele zu nennen. Die Erfindung ist nicht auf diese Ausführungsformen für die Antriebseinrichtung 28 beschränkt.

Dia axiale Bewegung wie auch die axiale Last bzw. die laterale Bewegung bzw. laterale Last, wird durch die Strömungskörpersteuereinrichtung 18 bzw. deren Steuerstangenelement 20 übernommen. Dadurch kann eine Bewegung des Strömungskörpers 10 z.B. in Flugrichtung (streamwise motion) erzielt werden.

Obwohl die vorliegende Erfindung anhand bevorzugter Ausführungsbeispiele vorliegend beschrieben wurde, ist sie darauf nicht beschränkt, sondern auf vielfältige Weise modifizierbar.

So kann die Strömungskörpersteuereinrichtung 18 neben einem Steuerstangenelement 20 beispielsweise auch in Form eines Bügels (nicht dargestellt) ausgebildet sein, wie die Stützeinrichtung 22 und an einem oder zwei Punkten bzw. Lagerpunkten an dem Strömungskörper 10 befestigt sein. Dabei können die Lagerpunkte der Strömungskörpersteuereinrichtung und die Lagerpunkte der Stützeinrichtung an dem Strömungskörper beispielsweise auf der Achse HL-2 liegen. Dies ist aber nicht notwendig. Des Weiteren kann die Stützeinrichtung statt als eine Platte oder ein Rahmen in einer einteiligen Bügelform oder einer Dreiecksform auch aus Stangenelementen aufgebaut sein, wobei ein Stangenelement die Verbindung der Lagerpunkte B und A* und wahlweise zusätzlich ein weiteres Stangenelement die Verbindung der Lagerpunkte B und D bereitstellt. Wahlweise kann auch ein zusätzliches Stangenelement vorgesehen werden zur Verbindung der Lagerpunkte A* und D.

### Bezugszeichenliste

- 10: beweglicher Strömungskörper
- 11: weitere Landeklappe (benachbart zu Strömungskörper bzw. Landeklappe)
- 12: Flugzeugflügel
- 13: Befestigung
- 14: erster Befestigungsabschnitt
- 16: zweiter Befestigungsabschnitt
- 18: Strömungskörpersteuereinrichtung
- 20: Steuerstangenelement
- 22: Stützeinrichtung (erster Befestigungsabschnitt)
- 23: Stützeinrichtung (zweiter Befestigungsabschnitt)
- 24: sphärisches Lager
- 26: Bolzenelement
- 28: Antriebseinrichtung

## Patentansprüche

1. Flügel eines Luft- oder Raumfahrzeugs, wobei der Flügel (12) wenigstens einen beweglichen Strömungskörper (10) aufweist, wobei
der Flügel (12) eine erste bewegliche Stützeinrichtung (23) und eine zweite bewegliche Stützeinrichtung (22) aufweist, die mit dem Strömungskörper (10) und dem Flügel (12) verbunden sind, zum Drehen des Strömungskörpers (10) an dem Flügel (12), wobei der Strömungskörper (10) eine Bewegung in Strömungsrichtung beschreibt, wenn der Strömungskörper (10) aus seiner Ausgangsposition ausgefahren wird, wobei der Flügel (12) eine Strömungskörpersteuereinrichtung (18, 20) aufweist, wobei die Strömungskörpersteuereinrichtung (18, 20) an dem Flügel (12) in einem ersten Punkt (C) befestigt ist und die zweite Stützeinrichtung (22) in einem zweiten Punkt (B), wobei die beiden Punkte (C, B) der Strömungskörpersteuereinrichtung (18, 20) und der zweiten Stützeinrichtung (22) eine Achse (HL-1) bilden, wobei die Strömungskörpersteuereinrichtung (18, 20) in einem vorbestimmten Winkel (β) geneigt zu der Achse (HL-1) ausgebildet ist und wobei die Strömungskörpersteuereinrichtung (18, 20) einen Punkt des Strömungskörpers (10) in einer vorbestimmten Ebene um diese Achse (HL-1) führt und die laterale Bewegung der zweiten Stützeinrichtung (22) verhindert.

2. Flügel nach Anspruch 1,
**dadurch gekennzeichnet,**
**dass** die zweite Stützeinrichtung (22) in wenigstens einem oder zwei Punkten (A*, D) an dem Strömungskörper (10) befestigt ist.

3. Flügel nach Anspruch 1 oder 2,
**dadurch gekennzeichnet,**
**dass** die Strömungskörpersteuereinrichtung (18, 20) in wenigstens einem Punkt (A**) an dem Strömungskörper (10) befestigt ist.

4. Flügel nach Anspruch 1, 2 oder 3,
**dadurch gekennzeichnet,**
**dass** die Strömungskörpersteuereinrichtung (18, 20) zu der zweiten Stützeinrichtung (22) derart positioniert ist, dass sie Kräfte der zweiten Stützeinrichtung (22) in einer vorbestimmten Richtung aufnimmt, wobei die Strömungskörpersteuereinrichtung (18, 20) laterale bzw. axiale Kräfte der zweiten Stützeinrichtung (22) aufnimmt.

5. Flügel nach wenigstens einem der Ansprüche 1 bis 4,
**dadurch gekennzeichnet,**
**dass** die zweite Stützeinrichtung (22) als ein Rahmenelement oder eine Platte ausgebildet ist oder ein oder mehrere Stangenelemente aufweist, wobei die zweite Stützeinrichtung (22) insbesondere eine Bügelform oder eine Dreiecksform aufweist.

6. Flügel nach wenigstens einem der Ansprüche 2 bis 5,
**dadurch gekennzeichnet,**
**dass** der Punkt (A**) der Strömungskörpersteuereinrichtung (18, 20) an dem diese an dem Strömungskörper (10) befestigt ist und der Punkt (A*) der zweiten Stützeinrichtung (22) an dem diese an dem Strömungskörper (10) befestigt ist einen gemeinsamen Befestigungspunkt oder jeweils einen eigenen Befestigungspunkt an dem Strömungskörper (10) bilden.

7. Flügel nach wenigstens einem der vorhergehenden Ansprüche,
**dadurch gekennzeichnet,**
**dass** der Flügel (12) wenigstens einen ersten und einen zweiten Befestigungsabschnitt (14, 16) aufweist, wobei der erste Befestigungsabschnitt (14) die zweite Stützeinrichtung (22) und der zweite Befestigungsabschnitt (16) die erste Stützeinrichtung (23) aufweist und wobei der erste Befestigungsabschnitt (14) zusätzlich mit der Strömungskörpersteuereinrichtung (18, 20) versehen ist.

8. Flügel nach wenigstens einem der Ansprüche 2 bis 7,
**dadurch gekennzeichnet,**
**dass** eine, mehrere oder alle Punkte (A*, A**, B, C, D) der ersten und zweiten Stützeinrichtung (22, 23) und/oder der Strömungskörpersteuereinrichtung (18) zur Befestigen an dem Flügel (12) bzw. dem Strömungskörper (10) als sphärische Lager ausgebildet sind.

9. Flügel nach wenigstens einem der vorhergehenden Ansprüche,
**dadurch gekennzeichnet,**
**dass** die Strömungskörpersteuereinrichtung (18, 20) wenigstens ein Steuerstangenelement (20) aufweist.

10. Flügel nach wenigstens einem der vorhergehenden Ansprüche,
**dadurch gekennzeichnet,**
**dass** der Strömungskörper (10) eine Landeklappe oder ein Flügelelement ist.

11. Flugzeug mit wenigstens einem Flügel (12) gemäß einem der Ansprüche 1 bis 10.

## Claims

1. Wing of an aircraft or spacecraft, wherein the wing (12) has at least one mobile flow body (10), wherein the wing (12) has a first movable support device (23) and a second movable support device (22) which are connected to the flow body (10) and the wing (12), for rotating the flow body (10) on the wing (12), wherein the flow body (10) describes a movement in the flow direction when the flow body (10) is extended from its starting position,
wherein the wing (12) has a flow body control device (18, 20),
wherein the flow body control device (18, 20) is attached to the wing (12) at a first point (C) and the second support device (22) at a second point (B), wherein the two points (C, B) of the flow body control device (18, 20) and of the second support device (22) form an axis (HL-1),
wherein the flow body control device (18, 20) is formed inclined, by a predetermined angle (β), to the axis (HL-1), and wherein the flow body control device (18, 20) guides a point of the flow body (10) in a predetermined plane about this axis (HL-1) and prevents the lateral movement of the second support device (22).

2. Wing according to Claim 1,
**characterized in that**
the second support device (22) is attached to the flow body (10) at at least one or two points (A*, D) .

3. Wing according to Claim 1 or 2,
**characterized in that**
the flow body control device (18, 20) is attached to the flow body (10) at at least one point (A**).

4. Wing according to Claim 1, 2 or 3,
**characterized in that**
the flow body control device (18, 20) is positioned relative to the second support device (22) such that it takes up forces of the second support device (22) in a predetermined direction, wherein the flow body control device (18, 20) takes up lateral or axial forces of the second support device (22).

5. Wing according to at least one of Claims 1 to 4,
**characterized in that**
the second support device (22) is designed as a frame element or a plate, or has one or more rod elements, wherein the second support device (22) is in particular in the shape of a bracket or a triangle.

6. Wing according to at least one of Claims 2 to 5,
**characterized in that**
the point (A**) on the flow body control device (18, 20) at which the latter is attached to the flow body (10), and the point (A*) on the second support device (22) at which the latter is attached to the flow body (10) form a common attachment point, or in each case an individual attachment point on the flow body (10).

7. Wing according to at least one of the preceding claims,
**characterized in that**
the wing (12) has at least a first and a second attachment section (14, 16), wherein the first attachment section (14) has the second support device (22) and the second attachment section (16) has the first support device (23), and wherein the first attachment section (14) is additionally provided with the flow body control device (18, 20) .

8. Wing according to at least one of Claims 2 to 7,
**characterized in that**
one, several or all of the points (A*, A**, B, C, D) on the first and second support device (22, 23) and/or on the flow body control device (18) are designed as spherical bearings for attaching to the wing (12) or to the flow body (10).

9. Wing according to at least one of the preceding claims,
**characterized in that**
the flow body control device (18, 20) has at least one control rod element (20).

10. Wing according to at least one of the preceding claims,
**characterized in that**
the flow body (10) is a landing flap or a wing element.

11. Aircraft having at least one wing (12) according to one of Claims 1 to 10.

## Revendications

1. Aile d'un aéronef ou d'engin spatial, l'aile (12) comportant au moins un élément d'écoulement mobile (10),
l'aile (12) comportant un premier moyen de support mobile (23) et un deuxième moyen de support mobile (22) qui sont reliés à l'élément d'écoulement (10) et à l'aile (12) et qui sont destinés à faire tourner l'élément d'écoulement (10) au niveau de l'aile (12),
l'élément d'écoulement (10) effectuant un mouvement dans la direction d'écoulement lorsque l'élément d'écoulement (10) quitte sa position initiale,
l'aile (12) comportant un moyen de commande d'élément d'écoulement (18, 20),
le moyen de commande d'élément d'écoulement (18, 20) étant fixé à l'aile (12) en un premier point (C) et le deuxième moyen de support (22) étant fixé à l'aile en un deuxième point (B), les deux points (C, B) du moyen de commande d'élément d'écoulement (18, 20) et du deuxième moyen de support (22) formant un axe (HL-1),
le moyen de commande d'élément d'écoulement (18, 20) étant conçu pour être incliné suivant un angle prédéterminé (β) par rapport à l'axe (HL-1) et le moyen de commande d'élément d'écoulement (18, 20) guidant un point de l'élément d'écoulement (10) dans un plan prédéterminé autour de cet axe (HL-1) et empêchant le mouvement latéral du deuxième moyen de support (22).

2. Aile selon la revendication 1,
**caractérisée en ce que**
le deuxième moyen de support (22) est fixé à l'élément d'écoulement (10) en au moins un ou deux points (A*, D).

3. Aile selon la revendication 1 ou 2,
**caractérisée en ce que**
le moyen de commande d'élément d'écoulement (18, 20) est fixé à l'élément d'écoulement (10) en au moins un point (A**).

4. Aile selon la revendication 1, 2 ou 3,
**caractérisée** que
le moyen de commande d'élément d'écoulement (18, 20) est position par rapport au deuxième moyen de support (22) de manière à absorber des forces du deuxième moyen de support (22) dans une direction prédéterminée, le moyen de commande d'élément d'écoulement (18, 20) absorbant des forces latérales et axiales du deuxième moyen de support (22).

5. Aile selon l'une des revendications 1 à 4,
**caractérisée en ce que** le deuxième moyen de support (22) est conçu comme un élément de cadre ou une plaque ou comporte un ou plusieurs éléments de barre, le deuxième moyen de support (22) ayant en particulier une forme d'étrier ou une forme de triangle.

6. Aile selon l'une des revendications 2 à 5,
**caractérisée en ce que**
le point (A**) du moyen de commande d'élément d'écoulement (18, 20), auquel ce dernier est fixé à l'élément d'écoulement (10), et le point (A*) du deuxième moyen de support (22), auquel ce dernier est fixé à l'élément d'écoulement (10), forment un point commun, ou chacun un point séparé, de fixation à l'élément d'écoulement (10).

7. Aile selon l'une des revendications précédentes,
**caractérisée en ce que** l'aile (12) comporte au moins une première et une deuxième partie de fixation (14, 16), la première partie de fixation (14) comportant le deuxième moyen de support (22) et la deuxième partie de fixation (16) comportant le premier moyen de support (23) et la première partie de fixation (14) étant en outre munie du moyen de commande d'élément d'écoulement (18, 20).

8. Aile selon l'une des revendications 2 à 7,
**caractérisée en ce qu'**un point, plusieurs points ou tous les points (A*, A**, B, C, D) des premier et deuxième moyens de support (22, 23) et/ou du moyen de commande d'élément d'écoulement (18) sont conçus comme des paliers sphériques pour être fixés à l'aile (12) ou à l'élément d'écoulement (10).

9. Aile selon l'une au moins des revendications précédentes,
**caractérisée en ce que**
le moyen de commande d'élément d'écoulement (18, 20) comporte au moins un élément de barre de commande (20).

10. Aile selon l'une au moins des revendications précédentes, **caractérisée en ce que** l'élément d'écoulement (10) est un volet d'atterrissage ou un élément d'aile.

11. Aéronef comprenant au moins une aile (12) selon l'une des revendications 1 à 10.
